# EUROPÄISCHE PATENTANMELDUNG

(11) **EP 3 135 730 A1**
(43) Veröffentlichungstag der Anmeldung: **01.03.2017**
(21) Anmeldenummer: 15182647.6
(22) Anmeldetag: 27.08.2015
(51) Int. Cl.: C08L 77/06

(54) **POLYAMIDE MIT NIEDRIGEM KRISTALLISATIONSPUNKT UND GERINGER SCHWINDUNG**

(71) Anmelder: BASF SE, 67056 Ludwigshafen am Rhein (DE)
(72) Erfinder: CREMER, Jens, 67269 Gruenstadt (DE); SCHÄFER, Andre, 67346 Speyer (DE); RAUSCHENBERGER, Volker, 67304 Eisenberg (DE)
(74) Vertreter: BASF IP Association

(57) **Zusammenfassung**

Die Erfindung betrifft thermoplastische Formmassen, enthaltend
A) 10 bis 50 Gew.-% eines teilkristallinen Polyamides,
B) 4 bis 30 Gew.-% eines amorphen Polyamides, enthaltend Einheiten abgeleitet von Hexamethylendiamin, Isophthalsäure und Terephthalsäure,
C) 4 bis 20 Gew.-% eines teilaromatischen Polyamides,
D) 30 bis 65 Gew.% eines faserförmigen Füllstoffes,
E) 0 bis 2 Gew.-% eines Wärmestabilisators,
F) 0 bis 1,5 Gew.- %eines Schmiermittels
G) 0 bis 30 Gew.-% weiterer Zusatzstoffe,

wobei die Summe der Gewichtsprozente A) bis G) 100% ergibt.

## Beschreibung

Die Erfindung betrifft thermoplastische Formmassen, enthaltend
A) 10 bis 50 Gew.-% eines teilkristallinen Polyamides, verschieden von B) und C)
B) 4 bis 30 Gew.-% eines amorphen Polyamides, enthaltend Einheiten abgeleitet von Hexamethylendiamin, Isophthalsäure und Terephthalsäure,
C) 4 bis 20 Gew.-% eines teilaromatischen Polyamides,
D) 30 bis 65 Gew.% eines faserförmigen Füllstoffes,
E) 0 bis 2 Gew.-% eines Wärmestabilisators,
F) 0 bis 1,5 Gew.- %eines Schmiermittels
G) 0 bis 30 Gew.-% weiterer Zusatzstoffe,
wobei die Summe der Gewichtsprozente A) bis G) 100% ergibt.

Weiterhin betrifft die Erfindung die Verwendung der Formmassen zur Herstellung von Formkörpern jeglicher Art und sowie die hierbei erhältlichen Formkörper.

Die EP-A 2746339 beschreibt die Herstellung von Polyamid-Formmassen bestehend aus Mischungen von Polyamid 6/6T und sich davon unterscheidenden teilaromatischen, teilkristallinen Polyamiden. Die so erhaltenen Formmassen zeichnen sich durch hohe Glaspunkte und Schmelztemperaturen aus.

Nachteilig ist bei diesen Formmassen sind die hohen Schmelzpunkte von über 285°C

In der DE-A 19821719 wird beschrieben, dass durch Kombination von einem korrespondierenden Copolyamid wie PA 66/6I/6T und amorphes PA 6I/6T und einem PA-Präpolymer mit niedriger Viskosität, Verbesserungen der Fließfähigkeit und der Oberflächenqualität möglich sind. Die Schwindung ist jedoch noch verbesserungswürdig.

Die EP-A 0728812 lehrt thermoplastische Formmassen aus teilaromatischen Copolyamiden mit sehr spezifischen Mengenverhältnissen der eingesetzten Monomere, sowie einem amorphen PA 6I/6T mit dem Ziel der Verbesserungen der Fließfähigkeit und der Chemikalienresistenz. Hierbei ist die Schlagzähigkeit noch verbesserungswürdig.

Die EP-A 2 650 331 beschreibt die Verwendung thermoplastischer Formmassen ausgehend von teilkristallinen Polyamiden und einem amorphen PA 6I/6T zur Herstellung von Formkörpern für Trinkwasseranwendungen.
Bislang bekannte Polyamide, welche gemäß des Standes der Technik verstärkt wurden (insbesondere bei hohen Füllstoff gehalten, sind bezüglich Mechanik, niedrigen Schmelzpunkten und einer verzögerten Kristallisation sowie einer geringen Schwindung verbesserungswürdig. Aufgabe der vorliegenden Erfindung war es daher, verstärkte, insbesondere mit hohen Mengen glasfaserverstärkte Polyamide zur Verfügung zu stellen, die eine gute Mechanik und bessere Schwindung bei der Verarbeitung sowie eine verzögerte Kristallisation und niedrige Schmelzpunkte aufweisen.

Demgemäß wurden die eingangs definierten Formmassen gefunden. Bevorzugte Ausführungsformen sind den Unteransprüchen zu entnehmen.

Als Komponente A) enthalten die erfindungsgemäßen Formmassen 10 bis 50, vorzugsweise 15 bis 45 und insbesondere 20 bis 40 Gew.-% mindestens eines teilkristallinen Polyamides, wobei aliphatische teilkristalline Polyamide bevorzugt sind. Diese sind verschieden von den Komponenten B) und C).

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.%-igen Lösung in 96 gew.-%iger Schwefelsäure bei 25°C gemäß ISO 307.

Teilkristalline Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid^{®} X17 der BASF SE, ein 1:1 molares Verhältnis von MXDA mit Adipinsäure).

Bevorzugte Polyamide sind Polyhexamethylenadipinsäureamid, Polyhexamethylensebacinsäureamid und Polycaprolactam sowie Copolyamide 6/66.

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid^{®}C31 der BASF SE).

Die nachfolgende nicht abschließende Aufstellung enthält die genannten, sowie weitere Polyamide A) im Sinne der Erfindung und die enthaltenen Monomeren.

### AB-Polymere:

| | |
|---|---|
| PA 4 | Pyrrolidon |
| PA 6 | ε-Caprolactam |
| PA 7 | Ethanolactam |
| PA 8 | Capryllactam |
| PA 9 | 9-Aminopelargonsäure |
| PA 11 | 11-Aminoundecansäure |
| PA 12 | Laurinlactam |

### AA/BB-Polymere

| | |
|---|---|
| PA 46 | Tetramethylendiamin, Adipinsäure |
| PA 66 | Hexamethylendiamin, Adipinsäure |
| PA 69 | Hexamethylendiamin, Azelainsäure |
| PA 610 | Hexamethylendiamin, Sebacinsäure |
| PA 612 | Hexamethylendiamin, Decandicarbonsäure |
| PA 613 | Hexamethylendiamin, Undecandicarbonsäure |
| PA 1212 | 1,12-Dodecandiamin, Decandicarbonsäure |
| PA 1313 | 1,13-Diaminotridecan, Undecandicarbonsäure |
| | |
| PA 6/66 | (siehe PA 6 und PA 66) |
| PA 6/12 | (siehe PA 6 und PA 12) |
| PA 66/6/610 | (siehe PA 66, PA 6 und PA 610) |
| PA PACM 12 | Diaminodicyclohexylmethan, Laurinlactam |

Als Komponente B) enthalten die erfindungsgemäßen Formmassen 5 bis 30, bevorzugt 10 bis 30 und insbesondere 10 bis 20 Gew.-% eines amorphen Polyamides, welches Einheiten abgeleitet von Hexamethylendiamin, Isophthalsäure und Terephthalsäure enthält.

Bevorzugt ist ein Verhältnis von Komponente A) zu B)
von 2:1 bis 8:1, insbesondere
von 2:1 bis 5:1.

Ein bevorzugtes Polyamid ist aus 6T/6I Einheiten aufgebaut, mit einem 6I-Anteil von mindestens 50, vorzugsweise 70 Gew.-% und höchstens 95, vorzugsweise höchstens 90 Gew.-% bezogen auf 100% B).

Verfahren zur Herstellung von B) sind dem Fachmann bekannt, so dass sich weitere Angaben hierzu erübrigen.

Als Komponente C) enthalten die erfindungsgemäßen Formmassen 5 bis 30, insbesondere 10 bis 30, vorzugsweise von 10 bis 20 Gew.-% eines teilaromatischen Polyamides.

Bevorzugt ist ein Verhältnis von Komponente B) zu C)
von 3:1 bis 1:3, insbesondere
von 2:1 bis 1:2.

Dies ist bevorzugt aufgebaut aus
C1) 20 bis 90 Gew.-% Einheiten, die sich von Terephthalsäure und Hexamethylendiamin ableiten,
C2) 0 bis 50 Gew.-% Einheiten, die sich von ε-Caprolactam ableiten und
C3) 0 bis 80 Gew.-% Einheiten, die sich von Adipinsäure und Hexamethylendiamin ableiten,
C4) 0 bis 40 Gew.-% weiteren polyamidbildenden Monomeren, wobei der Anteil der Komponente C2) oder C3) oder C4) oder deren Mischungen mindestens 10 Gew.-% beträgt.

Die Komponente C1) enthält 20 bis 90 Gew.-% Einheiten, die sich von Terephthalsäure und Hexamethylendiamin ableiten.

Neben den Einheiten, die sich von Terephthalsäure und Hexamethylendiamin ableiten, enthalten die Copolyaminde Einheiten, die sich von ε-Caprolactam ableiten und/oder Einheiten, die sich von Adipinsäure und Hexamethylendiamin und/oder Einheiten, die sich von weiteren poly-amidbildenden Monomeren ableiten.

Der Anteil an Einheiten, die sich von ε-Caprolactam ableiten, beträgt maximal 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 80 Gew.-%, vorzugsweise 30 bis 75 Gew.-% und insbesondere 35 bis 60 Gew.-% beträgt.

Die Copolyamide können auch sowohl Einheiten von ε-Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten und 20 bis 50, vorzugsweise 25 bis 40 Gew.-% Einheiten, die sich von ε-Caprolactam ableiten, enthalten, erwiesen.

Neben den vorstehend beschriebenen Einheiten C1) bis C3) können die teilaromatischen Copolyamide in Mengen bis 10 Gew.-% an weiteren polyamidbildenden Monomeren C4) enthalten, wie sie von anderen Polyamiden bekannt sind.

Aromatische Dicarbonsäuren C4) weisen 8 bis 16 Kohlenstoffatome auf. Geeignete aromatische Dicarbonsäuren sind beispielsweise Isophthalsäure, substituierte Terephthal- und Isophthalsäuren wie 3-t-Butylisophthalsäure, mehrkernige Dicarbonsäuren, z.B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4- oder 2,6-Naphthalindicarbonsäure, Phenoxyterephthalsäure, wobei Isophthalsäure besonders bevorzugt ist.

Weitere polyamidbildende Monomere C4) können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin, Piperazin, 4,4'-Diaminodicyclohexylmethan, 2,2-(4,4'-Diaminodicyclo-hexyl)propan oder 3,3'-Dimethyl-4,4'-Diaminodicyclohexylmethan als Vertreter der Diamine und Capryllactam, Önanthlactam, ω-Aminoundecansäure und Laurinlactam als Vertreter von Lactamen bzw. Aminocarbonsäuren genannt.

Enthält die Komponente C4) symmetrische Dicarbonsäuren, bei denen die Carboxylgruppen in para-Stellung stehen, so empfiehlt es sich, diese mit C1) und C2) oder C1) und C3) als ternäre Copolyamide aufzubauen, da andernfalls das Copolyamid einen zu hohen Schmelzpunkt aufweist und nur unter Zersetzung schmilzt, was nicht wünschenswert ist.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Die Herstellung derartiger Polyamide kann gemäß EP-A 129 195 und 129 196 erfolgen.

Die Mischung der Komponenten A) bis C) weist vorzugsweise einen Kristallisationspunkt von kleiner gleich 209°C, insbesondere 207°C gemäß ISO 11357 auf, gemessen mittels DSC in der ersten Abkühlkurve.

Als faserförmige Füllstoffe D) seien Kohlenstofffasern, Glasfasern, Carbonfasern, genannt, die in Mengen von 30 bis 65 Gew.-%, insbesondere 40 bis 60, vorzugsweise 45 bis 60 Gew.-% eingesetzt werden.

Als bevorzugte faserförmige Füllstoffe seien Kohlenstofffasern, Aramid-Fasern und Kaliumtitanat-Fasern genannt, wobei Glasfasern als ECR-Glas besonders bevorzugt sind. Diese können als Rovings oder Schnittglas in den handelsüblichen Formen eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:

X NH₂-,

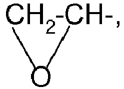

- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf D)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

### Komponente (E)

Als Komponente C können die erfindungsgemäßen thermoplastischen Formmassen 0 bis 2, bevorzugt 0,05 bis 2 Gew.-%, bevorzugt 0,05 bis 1,5 Gew.-%, besonders bevorzugt 0,1 bis 1,5 Gew.-% mindestens eines Wärmestabilisators enthalten.

In einer bevorzugten Ausführungsform sind die Wärmestabilisatoren ausgewählt aus der Gruppe bestehend aus
- Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, Cul, CuCN und Cu₂O, sowie die zweiwertigen Kupferverbindungen CuCl₂, CuSO₄, CuO, Kupfer(II)acetat oder Kupfer(II)stearat. Sofern eine Kupferverbindung verwendet wird, beträgt vorzugsweise die Menge an Kupfer 0,005 bis 0,5, insbesondere 0,005 bis 0,3 und besonders bevorzugt 0,01 bis 0,2 Gew.-%, bezogen auf die Summe der Komponenten A) bis E).
   Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise gleicher chemischer Natur wie Komponente (A), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogenide wie Nal, KI, NaBr, KBr eingesetzt, wobei das molare Verhältnis von Metallhalogenid zu Kupfer 0,5 bis 20, bevorzugt 1 bis 10 und besonders bevorzugt 2 bis 5 beträgt.
- Stabilisatoren auf Basis sekundärer aromatischer Amine, wobei diese Stabilisatoren vorzugsweise in einer Menge von 0,2 bis 2, bevorzugt 0,5 bis 1,5 Gew.-% vorliegen,
- Stabilisatoren auf Basis sterisch gehinderter Phenole, wobei diese Stabilisatoren vorzugsweise in einer Menge von 0,05 bis 1,5, bevorzugt 0,1 bis 1 Gew.-% vorliegen, und
- Mischungen der vorstehend genannten Stabilisatoren.

Besonders bevorzugte Beispiele für erfindungsgemäß einsetzbare Stabilisatoren auf Basis sekundärer aromatischer Amine sind Addukte aus Phenylendiamin mit Aceton (Naugard^{®} A), Addukte aus Phenylendiamin mit Linolen, Naugard^{®}445 (II), N,N'-Dinaphthyl-p-phenylendiamin (III), N-Phenyl-N'-cyclohexyl-p-phenylendiamin (IV) oder Mischungen von zwei oder mehreren davon

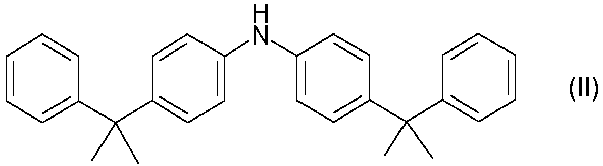

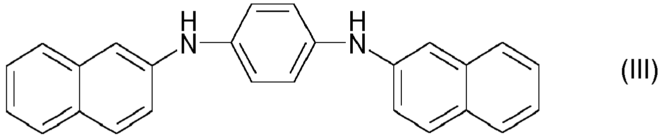

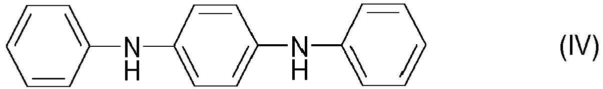

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid (V), Bis-(3,3-bis-(4'-hydroxy-3'-tert-butylphenyl)-butansäure)-glykolester (VI), 2,1'-Thioethylbis-(3-(3,5-di.tert-butyl-4-hydroxyphenyl)-propionat (VII), 4-4'-Butyliden-bis-(3-methyl-6-tert.-butylphenol) (VIII), Triethylenglykol-3-(3-tert-butyl-4-hydroxy-5-methylphenyl)-propionat (IX) oder Mischungen von zwei oder mehr davon

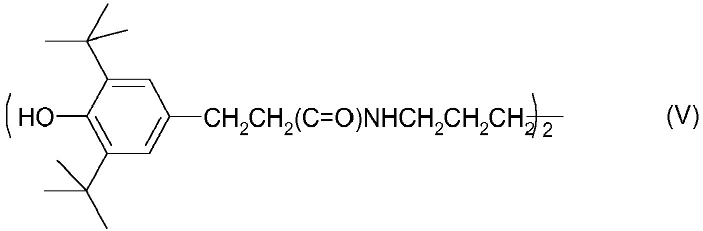

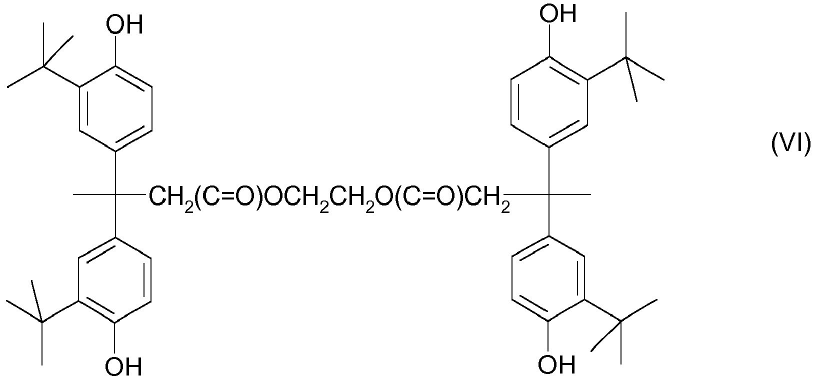

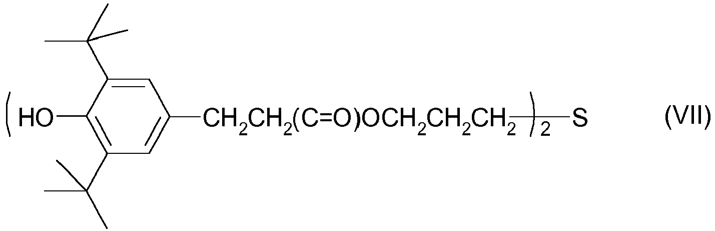

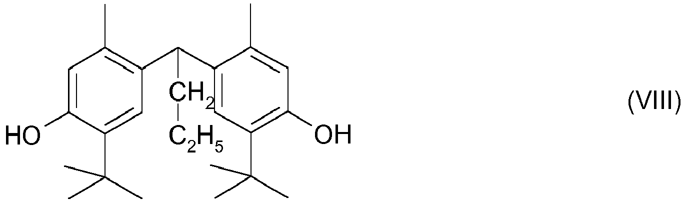

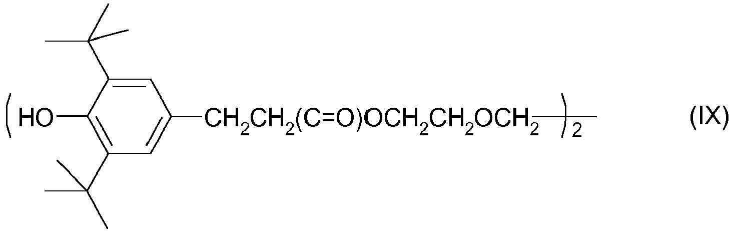

### Komponente (F)

Die erfindungsgemäßen thermoplastischen Formmassen können 0 bis 1,5 Gew.-%, bevorzugt 0,05 bis 1,5 Gew.-%, besonders bevorzugt 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen, vorzugsweise mit 14 bis 44 C-Atomen. Die Metallionen sind vorzugsweise Erdalkali und Al, wobei Ca oder Mg besonders bevorzugt sind. Bevorzugte Metallsalze sind Ca-Stearat und Ca-Montanat sowie Al-Stearat. Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.
Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitrat, Glycerintrilaurat, Glycerinmonobehenat und Penta-erythrittetrastearat.

Es können auch Mischungen verschiedener Ester oder Amide oder Ester mit Amiden in Kombination eingesetzt werden, wobei das Mischungsverhältnis beliebig ist.

Als Komponente E) können die erfindungsgemäßen Formmassen 0 bis 30, vorzugsweise 0 bis 20 Gew.-% weiterer Zusatzstoffe enthalten.

Beispiele für Schlagzähmodifier sind Kautschuke, welche funktionelle Gruppen aufweisen können. Es können auch Mischungen aus zwei oder mehreren unterschiedlichen schlagzähmodifizierenden Kautschuken eingesetzt werden.

Kautschuke, die die Zähigkeit der Formmassen erhöhen enthalten im allgemeinen einen elastomeren Anteil, der eine Glasübergangstemperatur von weniger als -10°C, vorzugsweise von weniger als -30°C aufweist, und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen, bevorzugt Carbonsäureanhydridgruppen.

Zu den bevorzugten funktionalisierten Kautschuken zählen funktionalisierte Polyolefinkautschuke, die aus folgenden Komponenten aufgebaut sind:
1. 40 bis 99 Gew.-% mindestens eines alpha-Olefins mit 2 bis 8 C-Atomen,
2. 0 bis 50 Gew.-% eines Diens,
3. 0 bis 45 Gew.-% eines C₁-C₁₂-Alkylesters der Acrylsäure oder Methacrylsäure oder Mischungen derartiger Ester,
4. 0 bis 40 Gew.-% einer ethylenisch ungesättigten C₂-C₂₀-Mono- oder Dicarbonsäure oder eines funktionellen Derivates einer solchen Säure,
5. 0 bis 40 Gew.-% eines Epoxygruppen enthaltenden Monomeren, und
6. 0 bis 5 Gew.-% sonstiger radikalisch polymerisierbarer Monomerer,
wobei die Summe der Komponenten 3) bis 5) mindestens 1 bis 45 Gew.-% beträgt, bezogen auf die Komponenten 1) bis 6).

Als Beispiele für geeignete alpha -Olefine können Ethylen, Propylen, 1-Butylen, 1-Pentylen, 1-Hexylen, 1-Heptylen, 1-Octylen, 2-Methylpropylen, 3-Methyl-1-butylen und 3-Ethyl-1-butylen genannt werden, wobei Ethylen und Propylen bevorzugt sind.

Als geeignete Dien-Monomere seien beispielsweise konjugierte Diene mit 4 bis 8 C-Atomen, wie Isopren und Butadien, nicht-konjugierte Diene mit 5 bis 25 C-Atomen, wie Penta-1,4-dien, Hexa-1,4-dien, Hexa-1,5-dien, 2,5-Dimethylhexa-1,5-dien und Octa-1,4-dien, cyclische Diene, wie Cyclopentadien, Cyclohexadiene, Cyclooctadiene und Dicyclopentadien, sowie Alkenylnorbornen, wie 5-Ethyliden-2-norbornen, 5-Butyliden-2-norbornen, 2- Methallyl-5-norbornen, 2-Isopropenyl-5-norbornen und Tricyclodiene, wie 3- Methyltricyclo-(5.2.1.0.2.6)-3,8-decadien, oder deren Mischungen genannt. Bevorzugt werden Hexa-1,5-dien, 5-Ethyliden-norbornen und Dicyclopentadien.

Der Diengehalt beträgt vorzugsweise 0,5 bis 50, insbesondere 2 bis 20 und besonders bevorzugt 3 bis 15 Gew.-%, bezogen auf das Gesamtgewicht des Olefinpolymerisats. Beispiele für geeignete Ester sind Methyl-, Ethyl-, Propyl-, n-Butyl, i-Butyl- und 2-Ethyl-hexyl-, Octyl- und Decylacrylate bzw. die entsprechenden Ester der Methacrylsäure. Von diesen werden Methyl-, Ethyl-, Propyl-, n-Butyl- und 2- Ethylhexylacrylat bzw. -methacrylat besonders bevorzugt.

Anstelle der Ester oder zusätzlich zu diesen können in den Olefinpolymerisaten auch säurefunktionelle und/oder latent säurefunktionelle Monomere ethylenisch ungesättigter Mono- oder Dicarbonsäuren enthalten sein.

Beispiele für ethylenisch ungesättigte Mono- oder Dicarbonsäuren sind Acrylsäure, Methacrylsäure, tertiäre Alkylester dieser Säuren, insbesondere tert.-Butylacrylat und Dicarbonsäuren, wie Maleinsäure und Fumarsäure, oder Derivate dieser Säuren sowie deren Monoester.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit 2 bis 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Als sonstige Monomere kommen z. B. Vinylester und Vinylether in Betracht.

Besonders bevorzugt sind Olefinpolymerisate aus 50 bis 98,9, insbesondere 60 bis 94,85 Gew.-% Ethylen, und 1 bis 50, insbesondere 5 bis 40 Gew.-% eines Esters der Acryl- oder Methacrylsäure 0,1 bis 20,0, insbesondere 0,15 bis 15 Gew.-% Glycidylacrylat und/oder Glycidylmethacrylat, Acrylsäure und/oder Maleinsäureanhydrid.

Besonders geeignete funktionalisierte Kautschuke sind Ethylen-Methylmethacrylat-Glycidylmethacrylat-, Ethylen-Methylacrylat-Glycidylmethacrylat-, Ethylen-Methyl-acrylat-Glycidylacrylat- und Ethylen-Methylmethacrylat-Glycidylacrylat-Polymere.

Die Herstellung der vorstehend beschriebenen Polymere kann nach an sich bekannten Verfahren erfolgen, vorzugsweise durch statistische Copolymerisation unter hohem Druck und erhöhter Temperatur.

Der Schmelzindex dieser Copolymere liegt im Allgemeinen im Bereich von 1 bis 80 g/10 min (gemessen bei 190°C und 2,16 kg Belastung).
Als weitere Gruppe von geeigneten Kautschuken sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glasübergangstemperatur von mindestens 25°C, unter einem weichen Bestandteil ein Polymerisat mit einer Glasübergangstemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich im Allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischem oligomerem Octamethyltetrasiloxan oder Tetravinyltetramethyltetrasiloxan hergestellt werden. Diese können beispielsweise mit gamma-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im Allgemeinen von Styrol, alpha-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl-(meth)acrylat, Acrylsäure, Glycidyl(meth)acrylat und Vinyloxazolin. Der Anteil an Monomeren mit funktionellen Gruppen beträgt im Allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im Allgemeinen 1 : 9 bis 9 : 1, bevorzugt 3 : 7 bis 8 : 2.

Derartige Kautschuke sind an sich bekannt und beispielsweise in der EP-A-0 208 187 beschrieben. Der Einbau von Oxazingruppen zur Funktionalisierung kann z.B. gemäß EP-A-0 791 606 erfolgen.

Eine weitere Gruppe von geeigneten Schlagzähmodifiern sind thermoplastische Polyester-Elastomere. Unter Polyester-Elastomeren werden dabei segmentierte Copoly-etherester verstanden, die langkettige Segmente, die sich in der Regel von Poly-(alkylen)etherglykolen und kurzkettige Segmente, die sich von niedermolekularen
Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel TM (Du Pont), Arnitel TM (Akzo) und Pelprene TM (Toyobo Co. Ltd.) erhältlich.

Selbstverständlich können auch Mischungen verschiedener Kautschuke eingesetzt werden.

Ein Beispiel für Flammschutzmittel ist beispielsweise elementarer Phosphor. In der Regel kann der elementare Phosphor mit zum Beispiel Polyurethanen oder Aminoplasten oder Dialkylphthalaten, wie z.B. Dioctylphthalat, phlegmatisiert oder gecoated werden. Außerdem sind Konzentrate von rotem Phosphor zum Beispiel in einem Polyamid, Elastomeren oder Polyolefinen geeignet. Besonders bevorzugt sind Kombinationen von elementarem Phosphor mit 1,2,3,4,7,8,9,10,13,13,14,14-Dodecachloro-1,4,4a,5,6,6a,7,10,10a,11,12,12a-dodecahydro-1,4,7,10-dimethanodibenzoe(a,e)-cyclooctan (Dechlorane® TM Plus, Occidental Chemical Corp.) und gegebenenfalls einem Synergisten, wie Antimontrioxid. Phosphorverbindungen, wie organische Phosphate, Phosphonate, Phosphinate, Phosphinoxide, Phosphine oder Phosphite sind ebenfalls bevorzugt. Als Beispiel seien Triphenylphosphinoxid und Triphenylphosphat genannt. Dieses kann allein oder vermischt mit Hexabrombenzol oder einem chlorierten Biphenyl und, wahlweise, Antimonoxid verwendet werden.

Beispiele geeigneter Phosphate sind die folgenden:
Phenylbisdodocylphosphat, Phenylbisneopentylphosphat, Phenylethylhydrogenphos-phat, Phe-nyl-bis-(3-5,5'-trimethylhexyl)phosphat, Ethyldiphenylphosphat, 2- Ethylhexyldi(p-tolyl)phosphat, Bis-(2-ethylhexyl)phenylphosphat, Tri(nonylphenyl)phosphat, Phenylmethylhydrogenphosphat, Di(dodecyl)-p-tolylphosphat, Tri-cresylphosphat, Triphenylphosphat, Dibutylphenylphosphat, Diphenylhydrogenphosphat und Melaminpolyphosphat. Das am meisten bevorzugte Phosphat ist Triphenylphosphat. Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phosphornitrilchlorid, Phosphorsäureesteramide, Phosphorsäureesteramine, Phosphorsäureamide, Phosphonsäuramide, Tris(aziridinyl)-phosphinoxid oder Tetrakis(hydroxymethyl)phosphoniumchlorid. Diese entflammungshemmenden Additive sind größtenteils im Handel erhältlich.

Weitere geeignete Flammschutzmittel sind Hydroxide des Magnesiums, welche gegebenenfalls mit Silanverbindungen beschichtet sind oder Stickstoffverbindungen wie Melamincyanurat.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N'-Ethylenbistetrabromphthalimid Bedeutung erlangt.

Als Nukleierungsmittel können Natriumphenylphosphinat, Aluminiumoxid, Siliciumdi-oxid, Nylon 22 sowie bevorzugt Talkum eingesetzt werden.

Die vorliegende Erfindung betrifft auch ein Verfahren zur Herstellung der erfindungsgemäßen Formmassen, wobei die Komponenten (A), (B) und gegebenenfalls (C), (D) und (E) in den entsprechenden Mengen vermischt, bevorzugt durch Extrusion, werden. Bei diesem Verfahren können handelsübliche Zweiwellenextruder unterschiedlicher Größe (Wellendurchmesser) eingesetzt werden. Die Temperatur beträgt bei der Extrusion 200 bis 400°C, bevorzugt 250 bis 350°C, besonders bevorzugt 250 bis 320°C.

Die erfindungsgemäßen Polyamidformmassen können insbesondere durch die bekannten Verfahren zur Herstellung von langfaserverstärktem Stäbchengranulat hergestellt werden, insbesondere durch Pultrusionsverfahren, bei denen der endlose vorgeheizte Faserstrang (Roving) mit konstanter Geschwindigkeit durch die Polymerschmelze gezogen und dabei vollständig mit der Polymerschmelze durchtränkt und anschließend abgekühlt und geschnitten wird. Das auf diese Art und Weise erhaltene langfaserverstärkte Stäbchengranulat, das bevorzugt eine Granulatlänge von 2 bis 25 mm, Insbesondere von 4 bis 12 mm aufweist, kann mit den üblichen Verarbeitungsverfahren (wie z. B. Spritzgießen, Pressen) zu Formteilen weiterverarbeitet werden.

Das bevorzugte L/D-Verhältnis des Granulates beträgt nach Pultrusion 1 bis 8, insbesondere 2 bis 4.

Der aus erfindungsgemäßen Formmassen hergestellte Polymerstrang kann mit allen bekannten Granulierungsverfahren zu Granulat verarbeitet werden, wie z. B. durch Stranggranulierung, bei der der Strang in einem Wasserbad abgekühlt und anschließend geschnitten wird.

### Die Granulierung erfolgt beim LFT im trockenen Zustand.

Besonders gute Eigenschaften können beim Formteil mit schonenden Verarbeitungsverfahren erreicht werden. In diesem Zusammenhang bedeutet schonend vor allem, dass ein übermäßiger Faserbruch und die damit einhergehende starke Reduktion der Faserlänge weitgehend vermieden wird.

Beim Spritzguss bedeutet dies, dass Schnecken mit großem Durchmesser und tiefem Kompressionsverhältnis, insbesondere kleiner 2, und großzügig dimensionierte Düsen- und Angusskanäle bevorzugt zum Einsatz kommen. Ergänzend muss dafür gesorgt werden, dass die Stäbchengranulate mit Hilfe von hohen Zylindertemperaturen rasch aufschmelzen (Kontakterwärmung) und die Fasern nicht durch übermäßige Scherbeanspruchung zu stark zerkleinert werden. Unter Berücksichtigung dieser Maßnahmen werden erfindungsgemäß Formteile erhalten, die im Mittel eine höhere Faserlänge aufweisen als vergleichbare Formteile hergestellt aus kurzfaserverstärkten Formmassen. Hierdurch wird eine zusätzliche Verbesserung der Eigenschaften, insbesondere beim Zug, E-Modul, der Reißfestigkeit und der Kerbschlagzähigkeit erreicht.

Nach der Formteilverarbeitung z.B. durch Spritzguss beträgt die mittlere Faserlänge üblicherweise 0,05 bis 10 mm, insbesondere 0,35 bis 1,5 mm.

Die aus den erfindungsgemäßen Formmassen hergestellten Formkörper werden zur Herstellung von Innen- und Außenteilen, vorzugsweise mit tragender oder mechanischer Funktion im Bereich Elektro, Möbel, Sport, Maschinenbau, Sanitär und Hygiene, Medizin, Energie- und Antriebstechnik, Automobil und andere Transportmittel oder Gehäusematerial für Geräte und Apparate für die Telekommunikation, Unterhaltungselektronik, Haushaltsapparate, Maschinenbau, Heizungsbereich, oder Befestigungsteile für Installationen oder für Behälter und Lüftungsteile aller Art eingesetzt.

Die Mechanik, insbesondere die Schlagzähigkeit der erfindungsgemäßen Formmassenteile ist deutlich höher, wobei gleichzeitig eine bessere Schwindung gegeben ist. Der Kristallisationspunkt ist verzögert, wobei dieser vorzugsweise kleiner gleich 209°C, insbesondere unterhalb von 207°C gemäß ISO 11357 liegt.

### Verarbeitungsverfahren

Neben den üblichen Verarbeitungsverfahren, wie Extrusion oder Spritzguss kommen auch folgende Verarbeitungsverfahren in Frage:
- CoBi-Injektion oder Montagespritzguss für Hybridteile, bei denen die erfindungsgemäße Polyesterformmasse mit anderen kompatiblen oder inkompatiblen Werkstoffen, wie z.B. Thermoplasten, Duroplasten oder Elastomeren kombiniert wird.
- Insertteile, wie z.B. Lagerstellen oder Gewindeeinsätze aus der erfindungsgemäßen Polyesterformmasse, umspritzt mit anderen kompatiblen oder inkompatiblen Werkstoffen, wie z.B. Thermoplasten, Duroplasten oder Elastomeren.
- Outsertteile, wie Rahmen, Gehäuse oder Stützen aus der erfindungsgemäßen Polyamidformmasse, in welche Funktionselemente aus anderen kompatiblen oderinkompatiblen Werkstoffen, wie z.B. Thermoplasten, Duroplasten oder Elastomeren eingespritzt werden.
- Hybridteile (Elemente aus der erfindungsgemäßen Polyamidformmasse kombiniert mit anderen kompatiblen oder inkompatiblen Werkstoffen, wie z.B. Thermoplasten, Duroplasten oder Elastomeren) hergestellt durch Verbundspritzguss, Spritzschweißen. Montagespritzguss, Ultraschall·, Reib- oder Laserschweißen, Kleben, Börteln oder Nieten.
- Halbzeuge und Profile (z.B. hergestellt durch Extrusion, Pultrusion, Schichtung oder Lamination).
- Oberflächenbeschichtung, Kaschierungen, chemisches- oder physikalisches Metallisieren, Beflockung, wobei die erfindungsgemäße Polyamidformmasse das Substrat selbst oder der Substratträger oder bei Hybrid/Bi-Injektionsteilen ein definierter Substratbereich sein kann, welcher auch durch nachträgliche chemische (z.B. Ätzen) oder physikalische Behandlung (z.B. spanabhebend oder LASER-Abtrag) zur Oberfläche gebracht werden kann.
- Bedrucken, Transferdruck, 3-D Druck, Laserbeschriften.

### Beispiele

Es wurden folgende Komponenten verwendet:
Komponente A:
   Polyamid 66 mit einer Viskositätszahl VZ von 150 ml/g, gemessen als 0,5 gew.-%ige Lösung in 96 gew.-%iger Schwefelsäure bei 25°C nach ISO 307 (Es wurde Ultramid^{®}A27 der BASF SE verwendet).
Komponente B:
   Polyamid 6I/6T (70 : 30) mit einer VZ von 80 ml/g gemäß ISO 307. (Es wurde Selar^{®}3426 Du-Pont verwendet.)
Komponente C:
   Polyamid 6/6T (30/70) mit einer VZ von 126 ml/g gemäß ISO 307. (Es wurde Ultramid® T315 eingesetzt.)
Komponente E)
   Irganox® 1098 der BASF SE
Komponente F)
   Ethylen bis Stearylamid
Komponente D)
   Schnittglasfaser d₅₀ = 10 µm
   (Es wurde HP 3610 der Firma PPG verwendet.)

### Herstellung der Formmassen und Granulate

Kompoundierung auf einer - ZSK 25; Massetemperatur 280°C, Drehmoment 75%, Drehzahl 300-390, Durchsatz 18-20 kg/h mit anschließender Granulierung.

Die Stäbchengranulate wurden zu Prüfkörpern Schulterstab ISO 527-2, Charpystab ISO 179-1 gemäß ISO verarbeitet und gemäß DIN/ISO Normen (s. Tabelle 2) die mechanischen Eigenschaften (s. Tabelle) gemessen. Die Schwindung wurde gemäß ISO 294-4 gemessen.

Die Randfaserdehnung wurde gemäß ISO 178 bestimmt. Die DSC Messungen gemäß ISO 11357, wobei der Kristallisationspunkt in der ersten Abkühlkurve und der Schmelzpunkt in der zweiten Aufheizkurve bestimmt worden ist. (Aufheizrate und Abkühlrate mit 20 K/Min.)

**Tabelle 1: Zusammensetzung der Formmassen**

| Komponenten [Gew.-%] | | | | | | | |
|---|---|---|---|---|---|---|---|
| | Vergleich 1 | Vergleich 2 | Beispiel 1 | Beispiel 2 | Beispiel 3 | Beispiel 4 | Beispiel 5 |
| A | 49,5 | 29,7 | 29,7 | 29,7 | 29,7 | 34,65 | 24,75 |
| B | - | 19,8 | 14,85 | 9,9 | 4,95 | 7,425 | 12,375 |
| C | - | - | 4,95 | 9,9 | 14,85 | 7,425 | 12,375 |
| D | 50 | 50 | 50 | 50 | 50 | 50 | 50 |
| E | 0,25 | 0,25 | 0,25 | 0,25 | 0,25 | 0,25 | 0,25 |
| F | 0,25 | 0,25 | 0,25 | 0,25 | 0,25 | 0,25 | 0,25 |

**Tabelle 2: Eigenschaften**

| | Einheit | ISO | V1 | V2 | 1 | 2 | 3 | 4 | 5 |
|---|---|---|---|---|---|---|---|---|---|
| Produktmerkmale | | | | | | | | | |
| | | | | | | | | | |
| Schmelzpunkt (DSC) | °C | 11357 | 261 | 258 | 254 | 253 | 250 | 257 | 248 |
| Kristallisationspunkt (DSC) | °C | 11357 | 229 | 210 | 192 | 199 | 206 | 206 | 199 |
| | | | | | | | | | |
| Mechanische Eigenschaften (trocken) | | | | | | | | | |
| | | | | | | | | | |
| Bruchdehnung | % | 527 | 2,5 | 2,3 | 3,3 | 3,2 | 3,1 | 2,8 | 3,1 |
| Randfaserdehnung max. | % | 178 | 3,1 | 2,9 | 3,6 | 3,6 | 3,6 | 3,5 | 3,6 |
| Charpy Schlagzähigkeit | kJ/m² | 179-2/1 eU | 88 | 94,0 | 111 | 113 | 109 | 111 | 105 |
| | | | | | | | | | |
| Verarbeitung | | | | | | | | | |
| | | | | | | | | | |
| Schwindung | | 294-4:2001 | | | | | | | |
| längs | % | | 0,40 | 0,26 | 0,20 | 0,22 | 0,26 | 0,28 | 0,20 |
| quer | % | | 1 | 0,65 | 0,47 | 0,54 | 0,60 | N/A | 0,36 |

## Patentansprüche

1. Thermoplastische Formmassen, enthaltend
A) 10 bis 50 Gew.-% eines teilkristallinen Polyamides,
B) 4 bis 30 Gew.-% eines amorphen Polyamides, enthaltend Einheiten abgeleitet von Hexamethylendiamin, Isophthalsäure und Terephthalsäure,
C) 4 bis 20 Gew.-% eines teilaromatischen Polyamides,
D) 30 bis 65 Gew.% eines faserförmigen Füllstoffes,
E) 0 bis 2 Gew.-% eines Wärmestabilisators,
F) 0 bis 1,5 Gew.- %eines Schmiermittels
G) 0 bis 30 Gew.-% weiterer Zusatzstoffe,
wobei die Summe der Gewichtsprozente A) bis G) 100% ergibt.

2. Thermoplastische Formmassen nach Anspruch 1, enthaltend
A) 10 bis 50 Gew.-%
B) 4 bis 30 Gew.-%
C) 4 bis 30 Gew.-%
D) 30 bis 65 Gew.-%
E) 0,05 bis 2 Gew.-%
F) 0 bis 1,5 Gew.-%
G) 0 bis 30 Gew.-%,
wobei die Summe der Gewichtsprozente A) bis G) 100% ergibt..

3. Thermoplastische Formmassen nach den Ansprüchen 1 oder 2, enthaltend
A) 10 bis 50 Gew.-%
B) 4 bis 30 Gew.-%
C) 4 bis 30 Gew.-%
D) 30 bis 65 Gew.-%
E) 0,05 bis 2 Gew.-%
F) 0,05 bis 1,5 Gew.-%
G) 0 bis 30 Gew.-%,
wobei die Summe der Gewichtsprozente A) bis G) 100% ergibt..

4. Thermoplastische Formmassen nach den Ansprüchen 1 bis 3, wobei die Komponente A) ein teilkristallines aliphatisches Polyamid ist.

5. Thermoplastische Formmassen nach den Ansprüchen 1 bis 4, wobei die Komponente B) ein Polyamid 6T / 6I mit einem 6I-Anteil von mindestens 52 Gew.-% und höchstens 90 Gew.-%, bezogen auf 100 % B) ist.

6. Thermoplastische Formassen nach den Ansprüchen 1 bis 5, wobei das teilaromatische Polyamid C) aus
C1) 20 bis 90 Gew.-% Einheiten, welche sich von Terephthalsäure und Hexamethylendiamin ableiten,
C2) 0 bis 50 Gew.-% Einheiten, welche sich von ε-Caprolactam ableiten,
C3) 0 bis 80 Gew.-% Einheiten, welche sich von Adipinsäure und Hexamethylendiamin ableiten,
C4) 0 bis 10 Gew.-% weiteren polyamidbildenden Monomeren,
wobei der Anteil der Komponente C2) oder C3) oder C4)oder deren Mischungen mindestens 10 Gew.-% beträgt.

7. Thermoplastische Formmassen nach den Ansprüchen 1 bis 6, in denen das teilaromatische Polyamid C) aus 25 bis 40 Gew.-% Einheiten C2) und 75 bis 60 Gew.-% Einheiten C1) aufgebaut ist.

8. Thermoplastische Formmassen nach den Ansprüchen 1 bis 7, in welchen die Komponenten A) bis C) einen Kristallisationspunkt von kleiner gleich 209 °C aufweisen gemäß ISO11357 (gemessen mittels DSC).

9. Verwendung der thermoplastischen Formmassen gemäß den Ansprüchen 1 bis 8 zur Herstellung von Fasern, Folien und Formkörpern.

10. Formkörper erhältlich aus den thermoplastischen Formmassen gemäß den Ansprüchen 1 bis 8.
